# EUROPÄISCHE PATENTSCHRIFT

(11) **EP 1 312 459 B1**
(45) Veröffentlichungstag und Bekanntmachung des Hinweises auf die Patenterteilung: **30.11.2005**
(21) Anmeldenummer: 02028381.8
(22) Anmeldetag: 27.03.2000
(51) Int. Cl.: B29C 49/56

(54) **Vorrichtung zur Blasformung von Behältern**
Device for blow moulding containers
Dispositif pour le moulage de récipients par soufflage

(30) Priorität: 25.06.1999 DE 19929033
(43) Veröffentlichungstag der Anmeldung: 21.05.2003
(62) Teilanmeldung aus: 00925056.4
(73) Patentinhaber: SIG Corpoplast GmbH & Co. KG, 22145 Hamburg (DE)
(72) Erfinder: Vogel, Klaus, 22885 Barsbüttel (DE); Linke, Michael, 22926 Ahrensburg (DE)
(74) Vertreter: Klickow, Hans-Henning

(56) Entgegenhaltungen:
- WO-A-98/13191
- DE-A- 4 212 583
- FR-A- 2 659 265
- US-A- 3 829 264

## Beschreibung

Die Erfindung betrifft eine Vorrichtung zur Blasformung von Behältern aus einem thermoplastischen Material, die mindestens eine Blasstation mit mindestens einer Blasform aufweist, die aus mindestens zwei von Trägern gehalterten Blasformsegmenten ausgebildet ist und bei der mindestens eines der Blasformsegmente relativ zu seinem Träger verschieblich angeordnet ist sowie bei der das Blasformsegment relativ zum Träger in einem für eine pneumatische Druckbeaufschlagung vorgesehenen Druckeinwirkungsbereich von einer umlaufenden Dichtung abgedichtet ist.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei Vorrichtungen zur Verarbeitung von thermoplastischen Kunststoffen werden typischerweise Formen verwendet, die zur Gewährleistung kurzer Prozeßzyklen geeignet temperiert werden müssen. Häufig erfolgt nicht nur eine Temperierung auf ein vorgegebenes Temperaturniveau, sondern in Abhängigkeit von den jeweiligen Verfahrensschritten wird die Form zunächst beheizt und nach einer Beendigung des Einbringens beziehungsweise der Verformung des thermoplastischen Kunststoffes gekühlt, um möglichst schnell eine Formbeständigkeit des Kunststoffteiles zu erreichen.

Als Temperiermedien werden typischerweise Öle oder Wasser eingesetzt. Diese flüssigen Temperiermedien durchströmen die zu temperierenden Teile im Bereich von Temperiermittelkanälen. Ein Wärmeübergang erfolgt durch einen Kontakt des Temperiermittels mit der Wandung des Temperiermittelkanales. Der Wirkungsgrad beim jeweiligen Wärmeübergang ist abhängig von der Temperaturdifferenz zwischen der Temperatur der Kanalwandung und der Temperatur des Temperiermittels in einer Umgebung der Wandung.

Bei der Konstruktion der Blasstationen müssen unterschiedliche Anforderungen erfüllt werden, bei denen jeweils bei einer Optimierung im Hinblick auf lediglich eine Anforderung negative Auswirkungen hinsichtlich der anderen Anforderungen zu erwarten sind. Einerseits wird beispielsweise ein möglichst geringes Baugewicht angestrebt, andererseits muß jedoch aufgrund der hohen Innendruckbeaufschlagung eine ausreichende Strukturfestigkeit gegeben sein. Ebenfalls muß dafür gesorgt werden, daß trotz der Innendruckeinwirkung eine ausreichend starke Zusammenpressung der Formhälften gegeneinander erfolgt, um eine Spaltbildung zu vermeiden, die bei den geblasenen Behältern eine erkennbare Naht im Außenbereich verursachen würde.

Aus der FR-A-2 659 265 ist es bereits bekannt, eine pneumatische Verspannung vom Blasformsegmenten vorzusehen, die von Trägern gehaltert sind. Es wird hierzu ein Druckeinwirkungsraum bereitgestellt, der von einer ringförmigen Dichtung begrenzt ist. Vor einer pneumatischen Druckbeaufschlagung des von der Dichtung umschlossenen Einwirkungsraumes erfolgt ein mechanisches Verpressen der Dichtung zur Bereitstellung eines flächigen Anliegens.

Aus der US-A-3,829,264 ist es bekannt, eine Verspannung von Blasformsegmenten einer Blasstation durch Verwendung eines kissenartigen pneumatischen Druckkörpers vorzusehen. In Abhängigkeit von einem jeweiligen Aufblaszustand des pneumatischen Kissens erfolgt die vorgesehene Verspannung der Blasformsegmente.

Aufgabe der vorliegenden Erfindung ist es, zur Unterstützung einer pneumatischen Verspannung des verschieblichen Blasformsegmentes relativ zu seinem Träger eine Dichtung derart zu konstruieren, daß eine hohe Abdichtwirkung erreicht wird.

Diese Aufgabe wird erfindungsgemäß dadurch gelöst, daß die Dichtung aus einem Elastomer ausgebildet ist und eine Dichtlippe aufweist, die bei einer pneumatischen Druckbeaufschlagung des Druckeinwirkbereiches flächig am Träger anliegt.

Gemäß einer bevorzugten Ausführungsform ist vorgesehen, daß der Träger mit mindestens zwei Führungselementen für das verschiebliche Blasformsegment versehen ist und daß das Führungssegment einen harten Kern aufweist, der mit dem Blasformsegment verbunden ist und der mindestens bereichsweise in ein Elastomer eingebettet ist, das vom Träger gehaltert ist.

Die Konstruktion der Dichtung mit einer flächig am Träger anliegenden Dichtlippe stellt eine sehr hohe Dichtwirkung bereit und vermeidet hierdurch Druckverluste. Gegenüber Dichtungen in Form von O-Ringen, bei denen lediglich eine strichartige Kontaktfläche bereitgestellt wird, wird durch die Verwendung der flächig anliegenden Dichtlippe eine stark vergrößerte Abdichtwirkung und damit ein deutlich erhöhter Wirkungsgrad bereitgestellt.

Durch die Verwendung eines Führungselementes mit einem harten Kern, der in ein Elastomer eingebettet ist, ist es möglich, das Blasformsegment ähnlich wie mit einer Bolzenführung zu haltern und gleichzeitig zum Ausgleich von Fertigungstoleranzen die nachgiebigen Eigenschaften des Elastomers zu nutzen. Zusätzlich werden durch das Elastomer bei einer Auslenkung des Blasformsegmentes Rückstellkräfte bereitgestellt, die nach einer Beendigung der pneumatischen Beaufschlagung ein Rückfedern in die Ausgangsposition verursachen.

Eine unmittelbare Verbindung zwischen dem Kern und dem Blasformsegment kann dadurch erfolgen, daß der Kern bereichsweise aus dem Elastomer herausragt.

Eine Verwendung universeller Bauelemente kann dadurch unterstützt werden, daß der Kern über ein Kopplungselement mit dem Blasformsegment verbunden ist.

Eine kompakte Bauform wird dadurch unterstützt, daß die Kombination aus dem Kern und dem Elastomer buchsenartig ausgebildet ist.

Zur Erreichung einer preiswerten Fertigung von erforderlichen Ausnehmungen zur Haltung der Bauelemente wird vorgeschlagen, daß das Elastomer den Kern mit einem gerundeten Verlauf umgibt.

Die Anzahl der verwendeten Bauelemente kann dadurch reduziert werden, daß der Kern direkt mit einer Formhälfte verbunden ist.

Zur Unterstützung einer Herstellung produktabhängiger Formteile mit geringem Baugewicht und in einer leicht auswechselbaren Gestaltung wird vorgeschlagen, daß der Kern mit einer Zwischenschale verbunden ist, die die Formhälfte trägt.

Eine Zuführung von Vorformlingen und Entnahme von geblasenen Behältern wird dadurch erleichtert, daß die Träger verschwenkbar miteinander verbunden sind.

Eine einfach zu realisierende Vorspannung kann dadurch erzeugt werden, daß zur Vorgabe einer Positionierung des verschieblichen Blasformsegmentes eine Druckbeaufschlagung vorgesehen ist.

Zur Gewährleistung eines Gegeneinandergrenzens der Formhälften auch bei einer Innendruckbeaufschlagung bei einer Behälterformung wird vorgeschlagen, daß eine der Formhälften relativ zur anderen Formhälfte pneumatisch verspannbar ist.

Zur Erreichung eines hohen Wirkungsgrades bei der Erzeugung der Vorspannung wird vorgeschlagen, daß mindestens eine der Formhälften relativ zum Träger abgedichtet gehaltert ist.

Eine weitere Vereinfachung der Bauform kann dadurch erfolgen, daß zur Bereitstellung einer Vorspannkraft ein Druckeinwirkungsbereich vorgesehen ist, der von einer umlaufenden Dichtung begrenzt ist.

Zur Gewährleistung einer qualitativ hochwertigen Druckdichtigkeit bei geringem gerätetechnischen Aufwand ist vorgesehen, daß die Führungselemente außerhalb des Druckeinwirkungsbereiches angeordnet sind.

Eine großflächige Anlage der Dichtlippe bei einer Druckbeaufschlagung wird dadurch unterstützt, daß die Dichtlippe einen Grundblock aufweist, der von einer Verjüngung mit einer Dichtlippe verbunden ist, die sich bereichsweise mit einem Abstand zu einem Basisvorsprung des Grundblockes erstreckt und gemeinsam mit dem Basisvorsprung einen Dichtungseinschnitt begrenzt.

Insbesondere ist es zur Erreichung einer vorgesehenen Verformung der Dichtung zweckmäßig, daß der Dichtungseinschnitt einem Druckeinwirkungsbereich zugewandt angeordnet ist.

In der Zeichnung sind Ausführungsbeispiele der Erfindung schematisch dargestellt. Es zeigen:
- Fig. 1:: Eine perspektivische Darstellung einer Blasstation zur Herstellung von Behältern aus Vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: einen horizontalen Schnitt durch eine Blasstation mit zwei relativ zueinander verschwenkbar angeordneten Trägern sowie einem relativ zu seinem Träger verschieblichen Blasformsegment,
- Fig. 5:: eine gegenüber Fig. 4 abgewandelte Ausführungsform bei Verwendung einer Außenschale zwischen den Formträgern und den Blasformsegmenten,
- Fig. 6:: einen weiteren Querschnitt zur Veranschaulichung der Einbausituation der Halterungselemente im Bereich der Formträger,
- Fig. 7:: eine Seitenansicht der Blasstation,
- Fig. 8:: eine vergrößerte Querschnittdarstellung einer Dichtung und
- Fig. 9:: eine Darstellung der Dichtung gemäß Fig. 8 während einer Druckmittelbeaufschlagung.

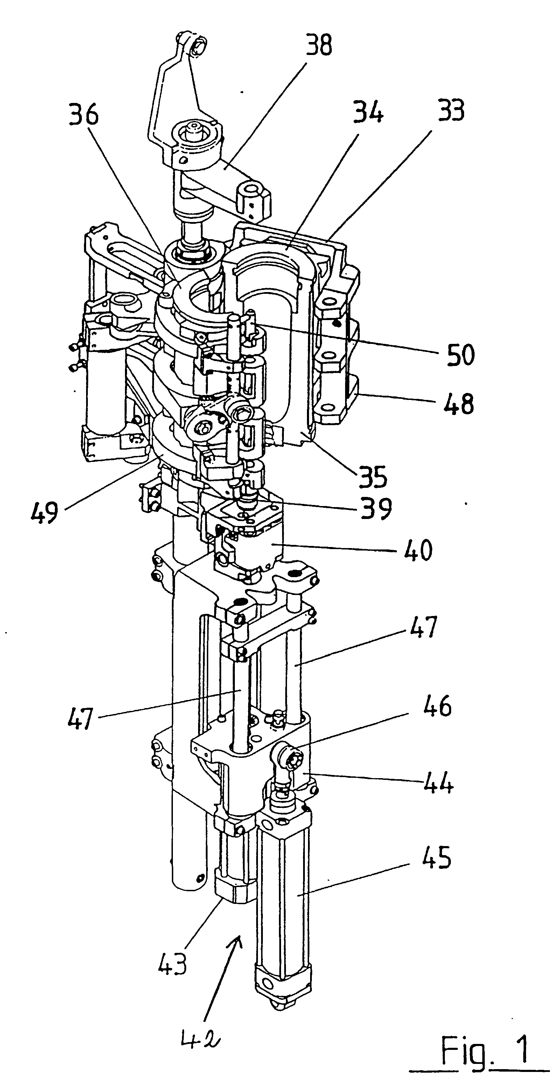

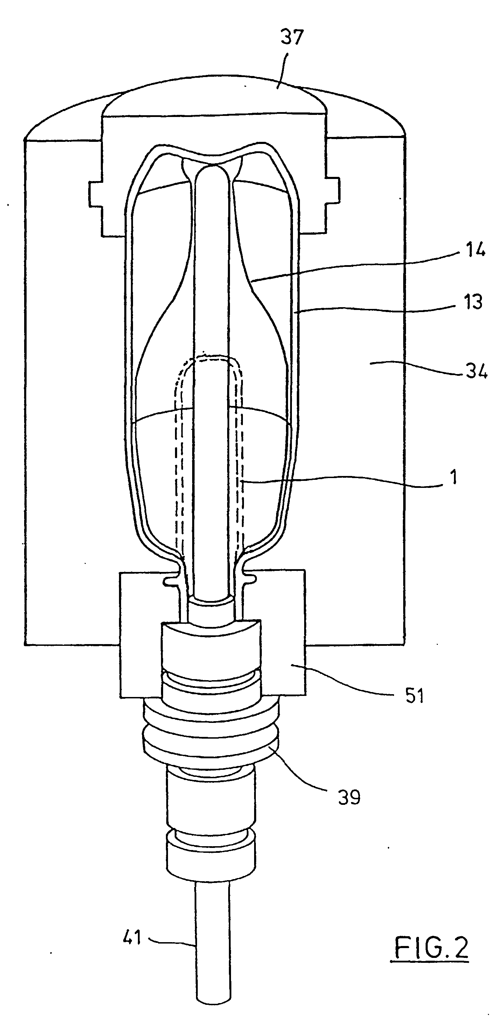

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyäthylenterephthalat sein. Zur Ermöglichung eines Einsetzens des Vorformlings (1) in die Blasform (34) und zur Ermöglichung eines Herausnehmens des fertigen Behälters besteht die Blasform (34) aus Formhälften (35,36) und einem Bodenteil (37), der von einer Hubvorrichtung (38) positionierbar ist. Der Vorformling (1) kann im Bereich der Blasstation (33) von einem Transportdorn (39) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Transportdornes (39) ein Anschlußkolben (40) angeordnet, der dem Vorformling (1) Druckluft zuführt und gleichzeitig eine Abdichtung relativ zum Transportdorn (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich des Bodens (7) des Vorformlings (1) gefahren. Während des eigentlichen Reckvorganges wird der Primärzylinder (43) mit ausgefahrener Reckstange gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine aktuelle Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48,49) angeordneten Formhälften (35,36) erfolgt eine Verriegelung der Träger (48) relativ zueinander mit Hilfe einer Verriegelungseinrichtung (50).

Zur Anpassung an unterschiedliche Formen des Mündungsabschnittes (2) ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

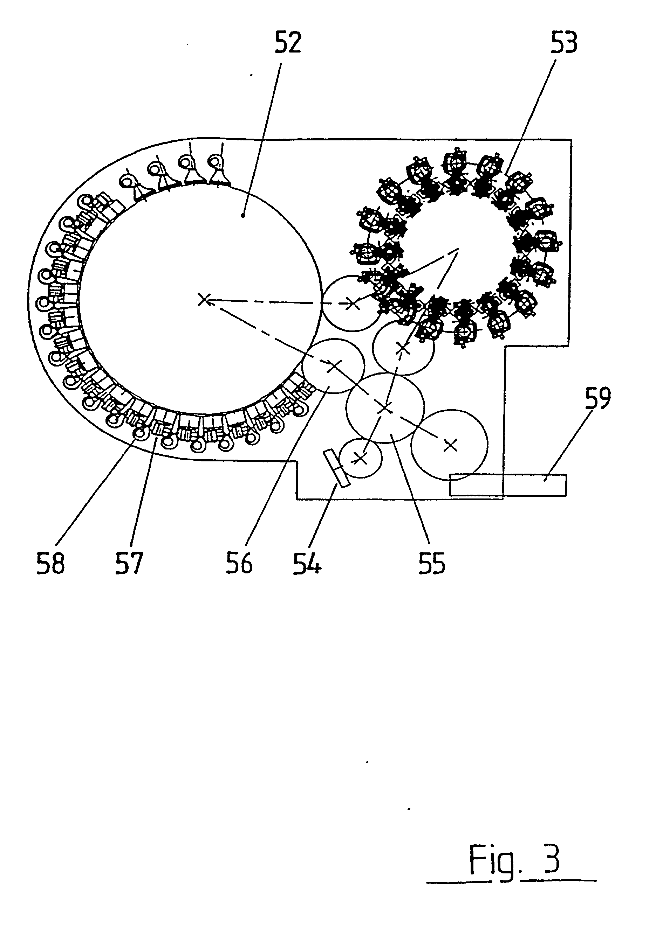

Fig. 3 zeigt den grundsätzlichen Aufbau einer Blasmaschine, die mit einem rotierenden Heizrad (52) sowie einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind Heizstrahler (57) sowie Gebläse (58) angeordnet, um die Vorformlinge (1) zu temperieren. Nach einer ausreichenden Temperierung der Vorformlinge (1) werden diese an das Blasrad (53) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

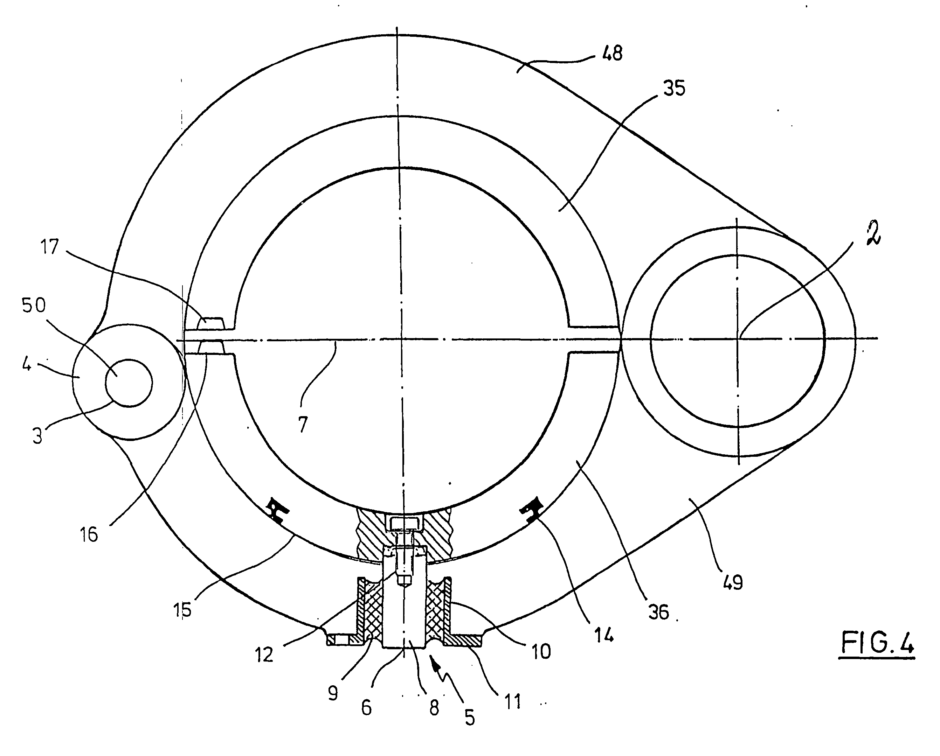

Aus der Horizontalschnittdarstellung in Fig. 4 ist erkennbar, daß die Träger (48, 49) relativ zu einer Drehachse (2) verschwenkbar angeordnet sind. Die Verriegelungseinrichtung (50) ist im Bereich von der Drehachse (2) abgewandten Begrenzungen der Träger (48, 49) angeordnet und kann aus einem Verriegelungsbolzen (3) bestehen, der in Verriegelungsbuchsen (4) geführt ist. Insbesondere ist daran gedacht, die Träger (48, 49) abwechselnd mit Verriegelungsbuchsen (4) derart auszustatten, daß bei einer Verschiebung des Verriegelungsbolzen (3) in Abhängigkeit von der jeweiligen Positionierung entweder eine Verriegelung oder eine Freigabe der Träger (48, 49) relativ zueinander vorliegt.

Aus Fig. 4 ist ebenfalls erkennbar, daß die Formhälfte (36) relativ zum zugeordneten Träger (49) von einem Führungselement (5) gehaltert ist. Das Führungselement (5) erlaubt eine Verschiebung der Formhälfte (36) relativ zum Träger (49) in Richtung einer Vorspannachse (6). Insbesondere ist daran gedacht, die Vorspannachse (6) im wesentlichen senkrecht zu einer Formtrennebene (7) zu positionieren.

Das Führungselement (5) besteht im wesentlichen aus einem harten Kern (8), der in ein Elastomer (9) eingebettet ist. Bei der in Fig. 4 dargestellten Ausführungsform ist das Elastomer (9) von einer Buchse (10) umgeben, deren Positionierung in Richtung der Vorspannachse (6) von einem Außenflansch (11) relativ zum Träger (49) vorgegeben ist. Insbesondere ist daran gedacht, die Buchse (10) konzentrisch zur Vorspannachse (6) anzuordnen und das Elastomer (9) ebenfalls ringartig relativ zur Vorspannachse (6) zu positionieren. Die Formhälfte (36) ist durch eine Verschraubung (12) mit dem Kern (8) verbunden.

Durch die Einbettung des Kerns (8) in das Elastomer (9) ist es möglich, eine Relativbewegung des Kerns (8) relativ zum Träger (49) in Richtung der Vorspannachse (6) durchzuführen. Nach einer Beendigung einer Beaufschlagung der Formhälfte (36) mit einer zugehörigen Verstellkraft wird durch die Eigenelastizität des Elastomers (9) eine Rückstellkraft erzeugt, die gegebenenfalls durch zusätzliche Federkräfte von separaten Federelementen oder durch eine zur Verstellkraft entgegengerichtete aktive Rückstellkraft unterstützt werden kann.

Zur Aufbringung der Vorspannkräfte ist insbesondere daran gedacht, zwischen der Formhälfte (36) und dem Träger (49) eine Dichtung (14) anzuordnen, die einen Druckeinwirkungsbereich (15) umschließt. In Richtung auf den Druckeinwirkungsbereich (15) kann ein pneumatischer Überdruck geleitet werden, der in Abhängigkeit von der beaufschlagten Einwirkungsfläche die Krafteinwirkung erzeugt.

Zusätzlich ermöglicht es die Kombination aus dem Elastomer (9) und dem Kern (8), Positionierbewegungen quer oder schräg zur Vorspannachse (6) durchzuführen. Derartige Bewegungen können aufgrund von Fertigungstoleranzen erforderlich sein, wenn Ausrichtelemente (16, 17), die beispielsweise als geeignete Prismensteine ausgebildet sein können, bei einem Zusammenführen der Formhälften (35, 36) ineinander eingreifen und eine exakte Ausrichtung der Formhälften (35, 36) relativ zueinander durchführen.

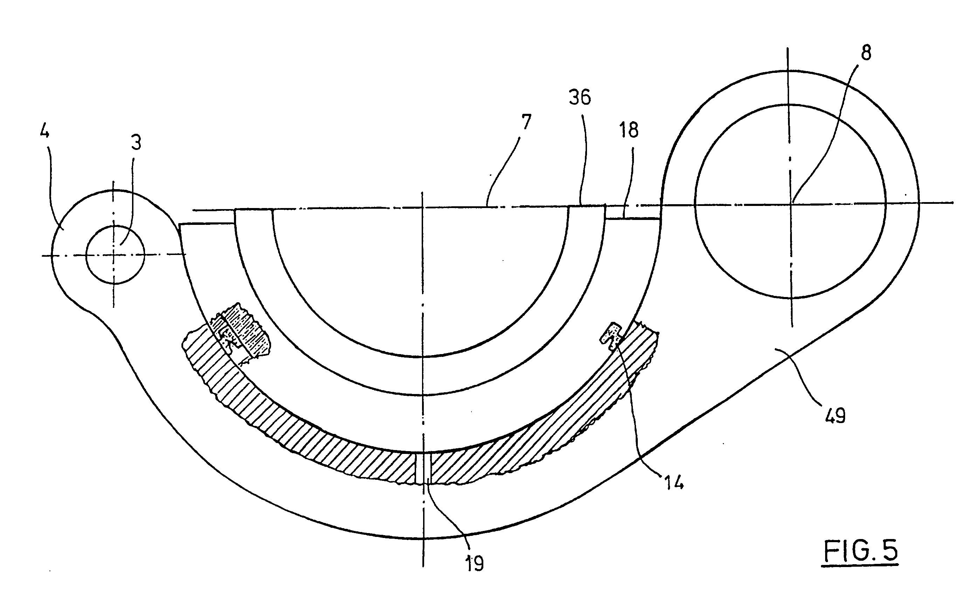

Fig. 5 zeigt eine Ausführungsform, bei der zwischen den Formhälften (35, 36) und den Trägern (48, 49) Zwischenschalen (18) angeordnet sind. Die Zwischenschalen (18) haltern in diesen Fall beispielsweise mit Hilfe von Schnellverschlüssen die Formhälften (35, 36). Bei dieser Ausführungsform ist die Dichtung (14) im Bereich einer den Trägern (49) zugewandten Rückseite der Zwischenschale (18) angeordnet. Eine Führung und Halterung der Zwischenschale (18) relativ zum Träger (49) kann wiederum über die in Fig. 4 dargestellten Führungselemente (5) mit Kern (8) und Elastomer (9) erfolgen.

Eine Zuführung des Druckgases in den Druckwirkungsbereich (15), der von der Dichtung (14) eingefaßt ist, erfolgt über eine Druckzuleitung (19). Nach Durchführung entsprechender pneumatischer Schaltoperationen kann das einwirkende Druckgas über die Druckzuleitung (19) auch wieder abgelassen werden.

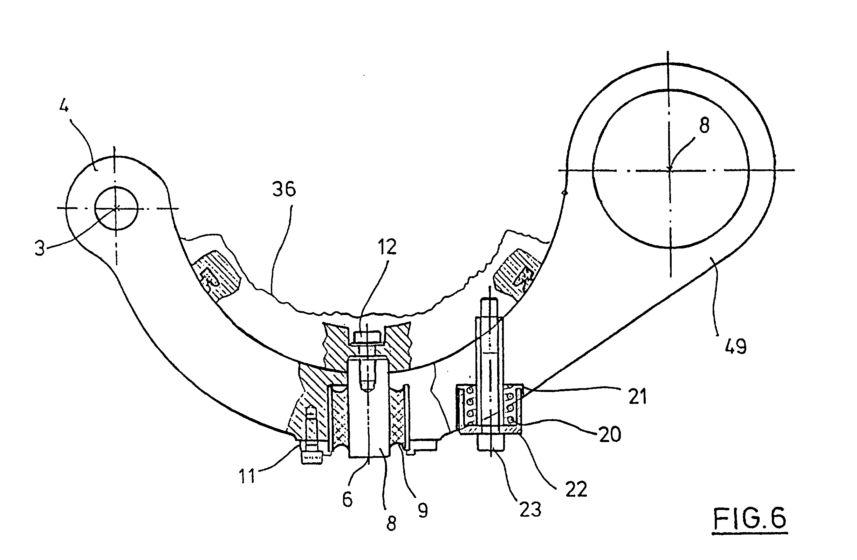

Fig. 6 zeigt eine Ausführungsform, bei der die Rückstellung der Formhälfte (36) nach einer Beendigung der Beaufschlagung mit der Vorspannkraft durch ein Federelement (20) unterstützt wird. Das Federelement (20) kann als eine Spiralfeder ausgebildet sein, die in einer Vertiefung (21) des Trägers (49) angeordnet ist und direkt oder unter Zwischenschaltung einer Spannhülse (22), einen Verbindungsbolzen (23) beaufschlagt, der mit der Formhälfte (36) beziehungsweise einer Zwischenschale (18) verschraubt ist und durch den Träger (49) hindurchragt.

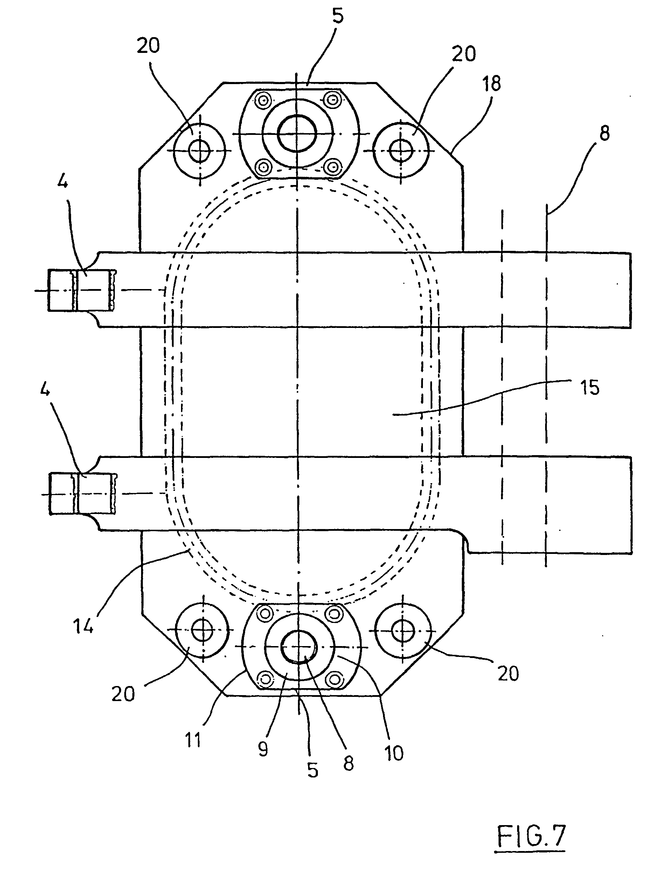

Fig. 7 zeigt bei Verwendung einer Zwischenschale (18) die räumliche Anordnung von zwei Führungselementen (5), vier Federelementen (20) sowie der Dichtung (14) relativ zueinander. Es ist erkennbar, daß eine relativ zu einer Mittellinie symmetrische Anordnung der Bauelemente realisiert ist. Insbesondere sind die Federelemente (20) und die Führungselemente (5) auch außerhalb des Druckeinwirkungsbereiches (15) angeordnet.

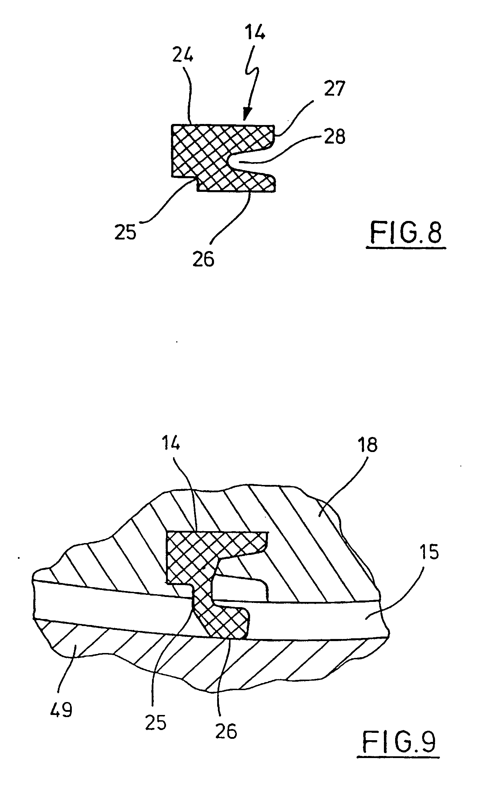

Fig. 8 zeigt in einer vergrößerten Querschnittdarstellung das Querschnittprofil der Dichtung (14). Insbesondere ist erkennbar, daß die Dichtung (14) einen Grundblock (24) aufweist, der in die Formhälfte (36) beziehungsweise die Zwischenschale (18) einsetzbar und von dieser gehaltert ist. Der Grundblock (24) ist von einer Verjüngung (25) in eine Dichtlippe (26) übergeleitet. Die Dichtlippe (26) begrenzt gegenüberliegend zu einem Basisvorsprung (27) des Grundblockes (24) einen u-förmigen oder v-förmigen Dichtungseinschnitt (28).

Fig. 9 zeigt die Dichtung (14) während einer Druckbeaufschlagung des Druckeinwirkungsbereiches (15). Ein sich ergebender Abstand zwischen dem Träger (48) und der Formhälfte (36) beziehungsweise der Zwischenschale (18) ist hierbei zur Verdeutlichung der Verformung der Dichtung (14) gegenüber realen Verhältnissen vergrößert dargestellt. Es ist insbesondere erkennbar, daß eine Verformung im Bereich der Verjüngung (25) derart erfolgt, daß die Dichtlippe (26) großflächig am Träger (48) anliegt. Es kann hierdurch eine sehr gute Dichtwirkung erreicht werden. Die Verformung erfolgt durch die Druckbeaufschlagung im Druckeinwirkungsbereich (15). Nach einer Beendigung der Druckbeaufschlagung kehrt die Dichtung (14) aufgrund der materialbedingten Rückstellkräfte in ihre ursprüngliche Form zurück.

## Patentansprüche

1. Vorrichtung zur Blasformung von Behältern (13) aus einem thermoplastischen Material, die mindestens eine Blasstation (33) mit mindestens einer Blasform (34) aufweist, die aus mindestens zwei von Trägern (48, 49) gehalterten Blasformsegmenten ausgebildet ist und bei der mindestens eines der Blasformsegmente relativ zu seinem Träger (48, 49) verschieblich angeordnet ist sowie bei der das Blasformsegment relativ zum Träger (48, 49) in einem für eine pneumatische Druckbeauf - schlagung vorgesehenen Druckeinwirkungsbereich (15) von einer umlaufenden Dichtung (14) abgedichtet ist, **dadurch gekennzeichnet, daß** die Dichtung (14) aus einem Elastomer ausgebildet ist und eine Dichtlippe (26) aufweist, die bei einer pneumatischen Druckbeaufschlagung des Druckeinwirkbereiches (15) flächig am Träger (48, 49) anliegt.

2. Vorrichtung nach Anspruch 1, **dadurch gekennzeichnet, daß** die Dichtlippe (26) einen Grundblock (24) aufweist, der von einer Verjüngung (25) mit einer Dichtlippe (26) verbunden ist, die sich bereichsweise mit einem Abstand zu einem Basisvorsprung (27) des Grundblockes (24) erstreckt und gemeinsam mit dem Basisvorsprung (27) einen Dichtungseinschnitt (28) begrenzt.

3. Vorrichtung nach Anspruch 1 oder 2, **dadurch gekennzeichnet, daß** der Dichtungseinschnitt (28) einem Druckeinwirkungsbereich (15) zugewandt angeordnet ist.

4. Vorrichtung nach einem der Ansprüche 1 bis 3, **dadurch gekennzeichnet, daß** der Träger (48, 49) mit mindestens zwei Führungselementen (5) für das verschiebliche Blasformsegment versehen ist und daß das Führungselement (5) einen harten Kern (8) aufweist, der mit dem Blasformsegment verbunden ist und mindestens bereichsweise in ein Elastomer (9) eingebettet ist, das vom Träger (48, 49) gehaltert ist.

5. Vorrichtung nach Anspruch 4, **dadurch gekennzeichnet, daß** der Kern (8) bereichsweise aus dem Elastomer (9) herausragt.

6. Vorrichtung nach Anspruch 4 oder 5, **dadurch gekennzeichnet, daß** der Kern (8) über ein Kopplungselement mit dem Blasformsegment verbunden ist.

7. Vorrichtung nach einem der Ansprüche 4 bis 6, **dadurch gekennzeichnet, daß** die Kombination aus dem Kern (8) und dem Elastomer (9) buchsenartig ausgebildet ist.

8. Vorrichtung nach einem der Ansprüche 4 bis 7, **dadurch gekennzeichnet, daß** das Elastomer (9) den Kern (8) mit einem gerundeten Verlauf umgibt.

9. Vorrichtung nach einem der Ansprüche 4 bis 8, **dadurch gekennzeichnet, daß** der Kern (8) direkt mit einer Formhälfte (35, 36) verbunden ist.

10. Vorrichtung nach einem der Ansprüche 4 bis 8, **dadurch gekennzeichnet, daß** der Kern (8) mit einer Zwischenschale (18) verbunden ist, die die Formhälfte (35, 36) trägt.

11. Vorrichtung nach einem der Ansprüche 4 bis 10, **dadurch gekennzeichnet, daß** die Träger (48, 49) verschwenkbar miteinander verbunden sind.

12. Vorrichtung nach einem der Ansprüche 4 bis 11, **dadurch gekennzeichnet, daß** zur Vorgabe einer Positionierung des verschieblichen Blasformsegmentes eine Druckbeaufschlagung vorgesehen ist.

13. Vorrichtung nach einem der Ansprüche 4 bis 12, **dadurch gekennzeichnet, daß** eine der Formhälften (35, 36) relativ zur anderen Formhälfte (35, 36) pneumatisch verspannbar ist.

14. Vorrichtung nach einem der Ansprüche 4 bis 13, **dadurch gekennzeichnet, daß** die Führungselemente (5) außerhalb des Druckeinwirkungsbereiches angeordnet sind.

## Claims

1. A device for the blow moulding of containers (13) from a thermoplastic material, which exhibits at least one blowing station (33) with at least one blowing mould (34) which is formed from at least two blowing-mould segments retained by supports (48, 49) and in which at least one of the blowing-mould segments is arranged so as to be displaceable relative to its support (48, 49) and in which the blowing-mould segment is sealed relative to the support (48, 49) by a peripheral seal (14) in a pressure-influence region (15) which is provided for a pneumatic application of pressure, **characterised in that** the seal (14) is formed from an elastomer and exhibits a sealing lip (26) which in the event of a pneumatic application of pressure on the pressure-influence region (15) bears against the support (48, 49) in planar manner.

2. Device according to Claim 1, **characterised in that** the sealing lip (26) exhibits a basic block (24) which is connected from a taper (25) to a sealing lip (26) which extends zonally with a spacing from a base projection (27) of the basic block (24) and together with the base projection (27) bounds a seal indentation (28).

3. Device according to Claim 1 or 2, **characterised in that** the seal indentation (28) is arranged facing towards a pressure-influence region (15).

4. Device according to one of Claims 1 to 3, **characterised in that** the support (48, 49) is provided with at least two guide elements (5) for the displaceable blowing-mould segment and **in that** the guide element (5) exhibits a hard core (8) which is connected to the blowing-mould segment and is at least zonally embedded in an elastomer (9) which is retained by the support (48, 49).

5. Device according to Claim 4, **characterised in that** the core (8) protrudes zonally from the elastomer (9).

6. Device according to Claim 4 or 5, **characterised in that** the core (8) is connected to the blowing-mould segment via a coupling element.

7. Device according to one of Claims 4 to 6, **characterised in that** the combination consisting of the core (8) and the elastomer (9) is formed in the manner of a bushing.

8. Device according to one of Claims 4 to 7, **characterised in that** the elastomer (9) surrounds the core (8) with a rounded contour.

9. Device according to one of Claims 4 to 8, **characterised in that** the core (8) is directly connected to one mould-half (35, 36).

10. Device according to one of Claims 4 to 8, **characterised in that** the core (8) is connected to an intermediate shell (18) which bears the mould-half (35, 36).

11. Device according to one of Claims 4 to 10, **characterised in that** the supports (48, 49) are connected to one another so as to be capable of swivelling.

12. Device according to one of Claims 4 to 11, **characterised in that** an application of pressure is provided for the purpose of presetting a positioning of the displaceable blowing-mould segment.

13. Device according to one of Claims 4 to 12, **characterised in that** one of the mould-halves (35, 36) is capable of being braced pneumatically relative to the other mould-half (35, 36).

14. Device according to one of Claims 4 to 13, **characterised in that** the guide elements (5) are arranged outside the pressure-influence region.

## Revendications

1. Dispositif pour le moulage par soufflage de récipients (13) à partir d'une matière thermoplastique, lequel dispositif présente au moins un poste de soufflage (33) avec au moins un moule de soufflage (34) qui est composé d'au moins deux segments de moule de soufflage qui sont maintenus par des supports (48, 49), et dans lequel au moins l'un des segments de moule de soufflage est agencé de manière à pouvoir être déplacé par rapport à son support (48, 49), et dans lequel également le segment de moule de soufflage est rendu étanche par rapport au support (48, 49) par un joint périphérique (14) dans une région (15) soumise à l'effet d'une pression pneumatique, **caractérisé en ce que** le joint (14) est réalisée à partir d'un élastomère et présente une lèvre d'étanchéité (26) qui porte avec toute sa surface contre le support (48, 49) lors de la mise sous pression pneumatique de la région (15) soumise à l'effet de la pression.

2. Dispositif selon la revendication 1, **caractérisé en ce que** la lèvre d'étanchéité (26) présente un bloc de base (24) qui est relié par un effilement (25) à une lèvre d'étanchéité (26), qui s'étend, dans certaines sections, à distance d'une saillie de base (27) du bloc de base (24) et limite, en commun avec cette saillie de base (27), une entaille d'étanchéité (28).

3. Dispositif selon la revendication 1 ou 2, **caractérisé en ce que** l'entaille d'étanchéité (28) est disposée, orientée vers une région (15) soumise à l'effet de la pression.

4. Dispositif selon l'une des revendications 1 à 3, **caractérisé en ce que** le support (48, 49) est pourvu d'au moins deux éléments de guidage (5) pour le segment de moule de soufflage déplaçable, et **en ce que** ledit élément de guidage (5) présente une âme dure (8) qui est reliée au segment de moule soufflage et noyée, au moins dans certaines sections, dans un élastomère (9) qui est maintenu par le support (48, 49).

5. Dispositif selon la revendication 4, **caractérisé en ce que** l'âme (8) fait saillie, dans certaines sections, en dehors de l'élastomère.

6. Dispositif selon la revendication 4 ou 5, **caractérisé en ce que** l'âme (8) est reliée au segment de moule de soufflage par l'intermédiaire d'un élément de couplage.

7. Dispositif selon l'une des revendications 4 à 6, **caractérisé en ce que** la combinaison de l'âme et de l'élastomère est réalisée à la manière d'une douille.

8. Dispositif selon l'une des revendications 4 à 7, **caractérisé en ce que** l'élastomère entoure l'âme (8) en évoluant en arrondi.

9. Dispositif selon l'une des revendications 4 à 8, **caractérisé en ce que** l'âme est reliée directement à une moitié de moule (35, 36).

10. Dispositif selon l'une des revendications 4 à 8, **caractérisé en ce que** l'âme (8) est reliée à une cuvette intermédiaire (18) qui porte la moitié de moule (35, 36).

11. Dispositif selon l'une des revendications 4 à 10, **caractérisé en ce que** les supports (48, 49) sont reliés ensemble en pivotement.

12. Dispositif selon l'une des revendications 4 à 11, **caractérisé en ce que**, pour la prédétermination d'un positionnement du segment de moule de soufflage déplaçable, une mise sous pression est prévue.

13. Dispositif selon l'une des revendications 4 à 12, **caractérisé en ce que** l'une des moitiés de moule (35, 36) peut être serrée de manière pneumatique par rapport à l'autre moitié de moule (35, 36).

14. Dispositif selon l'une des revendications 4 à 13, **caractérisé en ce que** les éléments de guidage (5) sont disposés en dehors de la région soumise à l'action de la pression.
